Europäisches Patentamt

European Patent Office

Office européen des brevets

(11) Veröffentlichungsnummer: **0 266 597 B1**

# (12) EUROPÄISCHE PATENTSCHRIFT

(45) Veröffentlichungstag der Patentschrift: **24.07.91**

(51) Int. Cl.5: **C01B 25/027**

(21) Anmeldenummer: **87115119.7**

(22) Anmeldetag: **16.10.87**

(54) **Verfahren zur Entfernung von metallischen Bestandteilen aus bei der elektrothermischen Herstellung von gelbem Phosphor anfallenden Stäuben.**

(30) Priorität: **05.11.86 DE 3637670**

(43) Veröffentlichungstag der Anmeldung:
**11.05.88 Patentblatt 88/19**

(45) Bekanntmachung des Hinweises auf die
Patenterteilung:
**24.07.91 Patentblatt 91/30**

(84) Benannte Vertragsstaaten:
**DE FR GB NL**

(56) Entgegenhaltungen:
**EP-A- 0 131 848**
**DE-C- 669 749**
**DE-C- 899 556**
**US-A- 3 717 451**

(73) Patentinhaber: **HOECHST AKTIENGESELL-SCHAFT**
**Postfach 80 03 20**
**W-6230 Frankfurt am Main 80(DE)**

(72) Erfinder: **Kolkmann, Friedrich, Dr.**
**Tiergartenstrasse 22e**
**W-5040 Brühl(DE)**
Erfinder: **Jödden, Klaus, Dr.**
**Neustrasse 66**
**W-5042 Erfstadt(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Entfernung von metallischen Bestandteilen, insbesondere von Schwermetallen, aus Staub, welcher aus dem bei der elektrothermischen Herstellung von gelbem Phosphor anfallenden, im wesentlichen aus Kohlenmonoxid und Phosphordampf bestehenden Gasgemisch elektrostatisch abgeschieden wurde.

Unter den stark reduzierenden Bedingungen im elektrothermischen Phosphorofen strömen ein Teil der mit den Einsatzstoffen Rohphosphat, Koks und Kies in den Phosphorofen eingebrachten metallischen Bestandteile elementar oder als leicht flüchtige Oxide mit dem im wesentlichen aus Phosphordampf und Kohlenmonoxid bestehenden Ofengas gasförmig aus dem Phosphorofen ab. Dabei sind die bedeutendsten metallischen Bestandteile Zink, Cadmium, Blei, Silber, Gallium, Germanium und Alkalimetalle; diese kondensieren entweder als diskrete Teilchen oder auf der Oberfläche von im Phosphorofengas enthaltenen Staubteilchen. Die diskreten Teilchen und die Staubteilchen werden aus dem Phosphorofengas durch elektrostatische Abscheidung abgetrennt, wozu in der Regel ein Elektroabscheider nach Cottrell eingesetzt wird, aus welchem der sog. Cottrell-Staub ausgetragen wird.

Der Cottrell-Staub, welcher einen relativ hohen Metallgehalt aufweist, kann entweder ausgeschleust und nach einer Verarbeitung deponiert werden (vergl. US-A-4 537 756) oder gemeinsam mit neuen Einsatzstoffen erneut in den Phosphorofen eingetragen werden. Dabei ist die Rezirkulation des Cottrell-Staubes in den Phosphorofen auf Grund seines hohen Gehaltes an Phosphor und Phosphorverbindungen aus wirtschaftlichen Gründen wünschenswert; jedoch bringt die Rezirkulation des Cottrell-Staubes eine Anreicherung seiner metallischen Bestandteile, insbesondere seiner Schwemetallbestandteile, mit sich, wodurch der Betrieb des Phosphorofens und der nachgeschalteten Elektroabscheider negativ beeinflußt werden (vergl. US-P-A-4 537 756).

Es ist daher Aufgabe der vorliegenden Erfindung, ein Verfahren anzugeben, welches eine Aufarbeitung des ausgeschleusten Cottrell-Staubes einerseits in eine metallarme Phase mit hohem Phosphorgehalt und andererseits in eine metall- bzw. metalloxidreiche Phase erlaubt. Das wird erfindungsgemäß dadurch erreicht, daß man den Staub zunächst unter oxidierenden Bedingungen bei Temperaturen von 300 bis 800 °C unter ständiger Bewegung calciniert; daß man das resultierende Calcinat mit Kohlenstoff vermischt und bei Temperaturen von 950 bis 1200 °C, vorzugsweise von 1000 bis 1100 °C, unter Verflüchtigung der metallischen Bestandteilen reduzierend behandelt; und daß man die verflüchtigten metallischen Bestandteile kondensiert und abscheidet.

Das Verfahren gemäß der Erfindung kann weiterhin wahlweise auch noch dadurch ausgestaltet sein, daß

a) man den Staub in Form eines Filterkuchens einsetzt, welcher durch Filtration einer durch Anrühren des Staubes mit Wasser gebildeten Suspension erhalten wurde;

b) die Suspension durch Anrühren des Staubes mit Wasser im Gewichtsverhältnis 1 : (2 bis 5) erhalten wurde;

c) das Calcinat vermahlen ist;

d) das Gemisch aus Calcinat und Kohlenstoff mit Phosphorsäure zu einem stichfesten Material verarbeitet ist;

e) das stichfeste Material zu Briketts geformt ist;

f) das Calcinat mit Kohlenstoff im Gewichtsverhältnis 10 : 1 bis 10 : 3 vermischt wird.

Mit dem erfindungsgemäßen Verfahren wird ein Rückstand erhalten, welcher in bezug auf den Metallgehalt des eingesetzten Cottrell-Staubes beträchtlich von Metallen, insbesondere Schwermetallen, abgereichert ist.

Beim Verfahren gemäß der Erfindung kann die Behandlung unter reduzierenden Bedingungen im Wirbelbett oder im Umwälzverfahren oder diskontinuierlich im Festbett durchgeführt werden.

Beim Erfindungsgemäßen Verfahren können als Trägergas ein Inertgas, beispielsweise Stickstoff, oder ein reduzierendes Gas wie Kohlenmonoxid oder Wasserstoff sowie auch deren Gemische verwendet werden. Verwendet man bei der Behandlung des Calcinates als Trägergas Luft, so wird durch Oxidation der Aktivkohle zu Kohlenmonoxid die reduzierende Atmosphäre in situ erzeugt.

Beim Verfahren gemäß der Erfindung kann das Trägergas nach Durchströmen der Kondensationsstufe zur Behandlung von weiterem Calcinat rezirkuliert werden.

Beim erfindungsgemäßen Verfahren ist die Verweilzeit unkritisch, sofern nicht extrem kurze Kontaktzeiten gewählt werden.

Beispiel 1 (Vergleichsbeispiel)

EP 0 266 597 B1

132 g eines Filterkuchens, welcher durch Filtration einer wäßrigen Suspension von Cottrell-Staub erhalten wurde und einen Gesamtphosphorgehalt von 21,3 % (als P$_2$O$_5$ gerechnet) sowie 0.14 % Gallium, 0,60 % Cadmium, 10,4 % Zink und 0,86 % Blei aufwies, wurde 2 Stunden bei 300°C getrocknet und anschließend gemahlen. Das trockene Mahlgut (100 g) wurde mit 20 g Aktivkohle vermischt. Das Gemsich wurde in einem senkrecht angeordneten, mit einem Rohr aus Pythagorasmasse ausgekleideten Quarzrohr im Kohlenmonoxid-Strom (6 l/h) auf 1050°C erhitzt und 1 Stunde bei dieser Temperatur belassen. Die abströmende Gasphase wurde durch eine gekühlte Vorlage geleitet, in welcher das Kondensat gesammelt wurde. Der im Reaktionsrohr verbliebene Rückstand (100,8 g) wurde zur vollständigen Verbrennung der Aktivkohle unter Überleiten von Luft (20 l/h) bei 800°C bis zur Gewichtskonstanz geglüht, wobei 85,0 g Rückstand resultierten. Der Rückstand enthielt 19,8 % P$_2$O$_5$, 0,022 % Gallium, 0.032 % Cadmium, 8,0 % Zink und 0,91 % Blei. Aus dem Vergleich der Gehalte in Filterkuchen und Rückstand ist die Abreicherung des Gesamtphosphors zu 40,1 % (als P$_2$O$_5$ gerechnet), des Galliums zu 89,9 %, des Cadmiums zu 96,6 %, des Zinks zu 50,5 % und des Bleis zu 32,5 % berechnet worden (vergl. Tabelle 1).

Beispiel 2 (gemäß der Erfindung)

200 g des getrockneten und gemahlenen Filterkuchens gemäß Beispiel 1 wurden 2 Stunden in einem Labor-Drehrohrofen bei 600°C unter Durchleiten von Luft (200 l/h) calciniert. Das Calcinat enthielt 21,8 % P$_2$O$_5$, 0,12 % Ga, 0,48 % Cd, 10,4 % Zn und 0,71 % Pb.
100 g des Calcinates wurden mit 25 g Aktivkohle vermischt und die Mischung mit 42 g Phosphorsäure (P$_2$O$_5$-Gehalt: 20,5 %) angeteigt und brikettiert. Die erhaltenen Preßlinge wurden in das im Beispiel 1 verwendete Reaktionsrohr eingebracht und darin bei 150°C getrocknet. Anschließend wurde unter Durchleiten eines CO-Stromes auf eine Endtemperatur von 950°C erhitzt und diese Temperatur 90 Minuten lang beibehalten. Die abströmende Gasphase wurde durch eine gekühlte Vorlage geleitet, in welcher das Kondensat gesammelt wurde. Die Verbrennung der restlichen Aktivkohle und das Glühen bis zur Gewichtskonstanz wurde analog Beispiel 1 durchgeführt.
Danach resultierten 93,3 g Rückstand mit 27,5 % P$_2$O$_5$, 0.06 % Ga, 0.020 % Cd, 6,3 % Zn und 0.10 % Pb. Die aus dem Vergleich von Filterkuchen und Rückstand errechenbaren prozentualen Abreicherungen sind in Tabelle 1 aufgeführt.

Beispiel 3 (gemäß der Erfindung)

Beispiel 2 wurde mit der Änderung wiederholt, daß die Endtemperatur im Quarzrohr 1050°C betrug.
Es resultierten 75,5 g Rückstand mit 16,1 % P$_2$O$_5$, 0.02 % Ga, 0,010 % Cd, 1,2 % Zn und 0,10 % Pb. Die aus dem Vergleich von Filterkuchen und Rückstand errechenbaren prozentualen Abreicherungen sind in Tabelle 1 aufgeführt.

Beispiel 4 (gemäß der Erfindung)

Beispiel 2 wurde mit der Änderung wiederholt, daß die Endtemperatur im Quarzrohr 1115°C betrug.
Es resultierten 70,6 g Rückstand mit 10,5 % P$_2$O$_5$, 0,01 % Ga, 0,010 % Cd, 0,025 % Zn und 0,10 % Pb. Die aus dem Vergleich von Filterkuchen und Rückstand errechenbaren prozentualen Abreicherungen sind in Tabelle 1 aufgeführt.

Beispiel 5 (Vergleichsbeispiel)

Beispiel 1 wurde mit der Änderung wiederholt, daß durch das Reaktionsrohr anstelle von Kohlenmonoxid ein Luftstrom (20 l/h) hindurchgeleitet wurde.
Der resultierende Rückstand (87, 1 g) enthielt 20,7 % P$_2$O$_5$ 0,083 % Ga, 0,06 % Cd, 12,0 % Zn und 0,96 % Pb. Die aus dem Vergleich von Filterkuchen und Rückstand errechenbaren prozentualen Abreicherungen sind in Tabelle 2 aufgeführt.

Beispiel 6 (gemäß der Erfindung)

100 g eines gemäß Beispiel 2 hergestellten Calcinates (mit 18,6 % P$_2$O$_5$, 0.16 % Ga, 0,91 % Cd, 10,9 % Zn und 0,96 % Pb) wurden mit 20 g Aktivkohle vermischt. Die Mischung wurde in das im Beispiel 1 verwendete Reaktionsrohr eingebracht und darin unter Durchleiten eines Luftstromes (20 l/h) auf eine Endtemperatur von 1050°C erhitzt und diese Temperatur 90 Minuten lang beibehalten. Die Behandlung der

3

abströmenden Gasphase und die Verbrennung der restlichen Aktivkohle erfolgte analog Beispiel 1.
Der resultierende Rückstand (83,3 g) enthielt 18,6 % $P_2O_5$, 0,03 % Ga, 0,05 % Cd, 5,3 % Zn und 0,51 % Pb. Die aus dem Vergleich von Filterkuchen und Rückstand errechenbaren prozentualen Abreicherungen sind in Tabelle 2 aufgeführt.

Tabelle 1

Trägergas im Reaktionsrohr: Kohlenmonoxid

| prozentuale Abreicherung | Beispiel 1 | Beispiel 2 | Beispiel 3 | Beispiel 4 |
|---|---|---|---|---|
| | 1050°C | 950°C | 1050°C | 1115°C |
| Phosphor (als $P_2O_5$) | 40,1 | 15,6*) | 60,0*) | 75,5*) |
| Ga | 89,9 | 53,4 | 87,4 | 94,0 |
| Cd | 96,6 | 96,1 | 98,4 | 98,5 |
| Zn | 50,5 | 43,5 | 91,3 | 99,8 |
| Pb | 31,8 | 86,8 | 89,4 | 89,9 |

*) das beim Brikettieren zusätzlich eingebrachte $P_2O_5$ ist mit eingerechnet

EP 0 266 597 B1

Tabelle 2

Trägergas im Reaktionsrohr: Luft

| prozentuale Abreicherung | Beispiel 5 | Beispiel 6 |
|---|---|---|
| | 1050°C | 1050°C |
| Phosphor (als $P_2O_5$) | 36,0 | 16,7 |
| Ga | 60,9 | 84,4 |
| Cd | 93,5 | 95,4 |
| Zn | 24,0 | 59,5 |
| Pb | 26,4 | 55,7 |

## Patentansprüche

1. Verfahren zur Entfernung von metallischen Bestandteilen, insbesondere von Schwermetallen, aus Staub, welcher aus dem bei der elektrothermischen Herstellung von gelbem Phosphor anfallenden, im wesentlichen aus Kohlenmonoxid und Phosphordampf bestehenden Gasgemisch elektrostatisch abgeschieden wurde, dadurch gekennzeichnet, daß man den Staub zunächst unter oxidierenden Bedingungen bei Temperaturen von 300 bis 800° C unter ständiger Bewegung calciniert; daß man das resultierende Calcinat mit Kohlenstoff vermischt und bei Temperaturen von 950 bis 1200° C, vorzugsweise von 1000 bis 1100° C, unter Verflüchtigung der metallischen Bestandteilen reduzierend behandelt; und daß man die verflüchtigten metallischen Bestandteile kondensiert und abscheidet.

2. Verfahren nach Anspruch 1, dadurch gekennzeichnet, daß man den Staub in Form eines Filterkuchens einsetzt, welcher durch Filtration einer durch Anrühren des Staubes mit Wasser gebildeten Suspension erhalten wurde.

3. Verfahren nach Anspruch 2, dadurch gekennzeichnet, daß die Suspension durch Anrühren des Staubes mit Wasser im Gewichtsverhältnis 1 : (2 bis 5) erhalten wurde.

4. Verfahren nach einem der Ansprüche 1 bis 3, dadurch gekennzeichnet, daß das Calcinat vermahlen ist.

5. Verfahren nach einem der Ansprüche 1 bis 4, dadurch gekennzeichnet, daß das Gemisch aus Calcinat und Kohlenstoff mit Phosphorsäure zu einem stichfesten Material verarbeitet ist.

6. Verfahren nach Anspruch 5, dadurch gekennzeichnet, daß das stichfeste Material zu Briketts geformt ist.

7. Verfahren nach einem der Ansprüche 1 bis 6, dadurch gekennzeichnet,, daß das Calcinat mit Kohlenstoff im Gewichtsverhältnis von 10 : 1 bis 10 : 3 vermischt wird.

5

**Claims**

1. A process for removing metallic constituents, especially heavy metals, from dust which has been electrostatically precipitated from the gas mixture which arises in the electrothermal production of yellow phosphorus and is essentially composed of carbon monoxide and phosphorus vapor, which comprises first calcining the dust under oxidizing conditions at temperatures from 300 to 800°C with continuous motion, mixing the resulting calcined product with carbon and subjecting the mixture to a reducing treatment at temperatures from 950 to 1200°C, preferably from 1000 to 1100°C, with volatilization of the metallic constituents, and condensing and precipitating the volatilized metallic constituents.

2. The process as claimed in claim 1, wherein the dust is charged in the form of filter cake which was obtained by filtration of a suspension formed by stirring the dust with water.

3. The process as claimed in claim 2, wherein the suspension was obtained by stirring the dust with water in a weight ratio of 1 : (2 to 5).

4. The process as claimed in any of claims 1 to 3, wherein the calcined product has been ground.

5. The process as claimed in any of claims 1 to 4, wherein the mixture of calcined product and carbon has been processed with phosphoric acid to give a compact material.

6. The process as claimed in claim 5, wherein the compact material has been formed into briquettes.

7. The process as claimed in any of claims 1 to 6, wherein the calcined product is mixed with carbon in a weight ratio from 10 : 1 to 10 : 3.

**Revendications**

1. Procédé pour l'élimination de constituants métalliques, en particulier de métaux lourds, de la poussière qui a été séparée par précipitation électrostatique du mélange gazeux, consistant essentiellement en monoxyde de carbone et vapeur de phosphore, se formant dans la fabrication électrothermique du phosphore blanc, caractérisé en ce que l'on calcine d'abord la poussière en mouvement constant en conditions oxydantes à des températures de 300 à 800°C ; en ce que l'on mélange le produit de calcination résultant avec du carbone et on traite par réduction à des températures de 950 à 1 200°C, de préférence de 1 000 à 1 100°C, avec volatilisation des constituants métalliques ; et en ce que l'on condense et on précipite les constituants métalliques volatilisés.

2. Procédé selon la revendication 1, caractérisé en ce que l'on utilise la poussière sous forme d'un tourteau de filtration qui a été obtenu par filtration d'une suspension formée par délayage de la poussière avec de l'eau.

3. Procédé selon la revendication 2, caractérisé en ce que la suspension a été obtenue par délayage de la poussière avec de l'eau dans le rapport pondéral 1 (2 à 5).

4. Procédé selon l'une des revendications 1 à 3, caractérisé en ce que le produit de calcination est moulu.

5. Procédé selon l'une des revendications 1 à 4, caractérisé en ce que le mélange du produit de calcination et du carbone est transformé par l'acide phosphorique en un produit consistant.

6. Procédé selon la revendication 5, caractérisé en ce que le produit consistant est moulé en briquettes.

7. Procédé selon l'une des revendications 1 à 6, caractérisé en ce que le produit de calcination est mélangé avec le carbone dans le rapport pondéral de 10 : 1 à 10 : 3.